# EUROPEAN PATENT APPLICATION

(11) **EP 4 174 665 A1**
(43) Date of publication of application: **03.05.2023**
(21) Application number: 20946417.1
(22) Date of filing: 22.07.2020
(51) Int. Cl.: G06F 13/00

(54) **SLAVE DEVICE, RELAY DEVICE, MASTER-SLAVE SYSTEM, SLAVE CONTROL METHOD, SLAVE CONTROL PROGRAM, RELAY METHOD, AND RELAY PROGRAM**

(71) Applicant: MITSUBISHI ELECTRIC CORPORATION, Chiyoda-ku Tokyo 100-8310 (JP)
(72) Inventor: OGAWA, Tomotaka, Tokyo 1008310 (JP)
(74) Representative: Pfenning, Meinig & Partner mbB
(86) International application number: PCT/JP2020/028385
(87) International publication number: WO 2022/018844

(57) **Abstract**

A slave apparatus (300) includes a clock extraction unit (310) and a time-point management unit (350). As long as the slave apparatus (300) receives serial data, the clock extraction unit (310) extracts a communication clock from the serial data being received. The time-point management unit (350) includes a timekeeper (351) driven based on the communication clock.

## Description

### Technical Field

The present disclosure relates to a slave apparatus, a relay apparatus, a master-slave system, a slave control method, a slave control program, a relay method, and a relay program.

### Background Art

In a system where a plurality of apparatuses connected by a wired network operate in cooperation with each other, it is necessary to synchronize time points of the plurality of apparatuses highly accurately in some cases in order to have a simultaneous operation timing among the plurality of apparatuses.

There is IEEE (Institute of Electrical and Electronics Engineers) 802.1AS-2011 (Non-Patent Literature 1) as a standard of a highly accurate time-point synchronization technique for highly accurately synchronizing time points of the plurality of apparatuses connected by the wired network. IEEE 802.1AS-2011 relates to a time-point synchronization technique for synchronizing time points of a plurality of apparatuses belonging to a network in a master-slave system made up of the plurality of apparatuses.

### Citation List

### Non-Patent Literature

Non-Patent Literature 1: IEEE Computer Society, "IEEE Std 802.1AS-2011 IEEE Standard for Local and metropolitan area networks-Timing and Synchronization for Time-Sensitive Applications in Bridged Local Area Networks", IEEE Standards Association, 2011 March

### Summary of Invention

### Technical Problem

A conventional highly accurate time-point synchronization technique intends usage which requires constant synchronization of time points of all of the apparatuses with high accuracy. Therefore, not only a master side but also a slave side needs to use a highly accurate oscillator. Variance among the time points of all of the apparatuses can be limited in a certain range by using the highly accurate oscillator also on the slave side and by repeating time-point synchronization at short intervals. As a specific example, the standard of Non-Patent Literature 1 requires ±100 ppm (parts per million) accuracy for clocks held by all of apparatuses which participate in the highly accurate time-point synchronization, including an apparatus on the slave side.

A cost of the highly accurate oscillator is high. However, the highly accurate oscillator has enough advantage to justify its cost, for the usage which requires constant synchronization of time points of all of the apparatuses with high accuracy. As a specific example, when the plurality of apparatuses are controlled via the network, there is an advantage of driving the plurality of apparatuses simultaneously by constantly synchronizing the time points of all of the apparatuses with high accuracy.

However, there also exists usage which does not require constant synchronization of time points of all of the apparatuses with high accuracy for their operation. When the highly accurate oscillator is used in that usage, there is no enough advantage to justify the cost of the oscillator. As a specific example, suppose a case where a wired network has been newly built or where a configuration of the wired network has been altered. A function of inferring the configuration of the wired network by measuring transfer time of an electric signal is not used until the next alternation on the configuration of the wired network, once the function is used to infer the configuration of the wired network. For this reason, this function may not be used for a long period of time. In order to infer the configuration of the wired network by measuring the transfer time of the electric signal, it is necessary to synchronize the time points of all of the apparatuses highly accurately. However, when the cost is taken into consideration, it may be difficult to synchronize the time points, using the highly accurate oscillator, just for the function which is seldom used.

The present disclosure aims to realize highly accurate synchronization of time points of a plurality of apparatuses even when not all of the plurality of apparatuses connected by a wired network are equipped with highly accurate oscillators.

### Solution to Problem

A slave apparatus according to the present disclosure which is, in a wired manner, connected to a master apparatus and which receives from the master apparatus, using a communication clock, as reception serial data, data generated by performing serialization on master transmission data transmitted by the master apparatus, the master apparatus being equipped with an oscillator producing a clock signal as the communication clock, the slave apparatus includes:
a clock extraction unit to extract the communication clock as a reception-side communication clock, from the reception serial data, as long as the slave apparatus receives the reception serial data; and
a time-point management unit to include a slave timekeeper driven based on the reception-side communication clock.

### Advantageous Effects of Invention

A slave apparatus according to the present disclosure receives serial data from a master apparatus, and manages a time point, using a clock signal extracted from the received serial data. When the master apparatus is equipped with a highly accurate oscillator, and the master apparatus generates the serial data based on the highly accurate oscillator, the slave apparatus can manage the time point, using a highly accurate clock signal, even if the slave apparatus is not equipped with the highly accurate oscillator. Further, a timekeeper may be used for time-point synchronization.

Therefore, even if not all of a plurality of apparatuses connected by a wired network are equipped with the highly accurate oscillators, it is possible to realize highly accurate synchronization of time points of the plurality of apparatuses.

### Brief Description of Drawings

Fig. 1 is a configuration example of a wired network of a master-slave system 90 according to a first embodiment.
Fig. 2 is a specific example of T-shape branching.
Fig. 3 is a specific example of the T-shape branching.
Fig. 4 is a specific example of a multidrop connection.
Fig. 5 is a specific example of the multidrop connection.
Fig. 6 is a configuration example of a master apparatus 100 according to the first embodiment.
Fig. 7 is a configuration example of a serial-signal transmission unit 150 according to the first embodiment.
Fig. 8 is a configuration example of a serial-signal reception unit 180 according to the first embodiment.
Fig. 9 is a hardware configuration example of a control unit 140 according to the first embodiment.
Fig. 10 is a configuration example of a slave apparatus 300 according to the first embodiment.
Fig. 11 is a flowchart illustrating an operation of the master apparatus 100 according to the first embodiment.
Fig. 12 is a flowchart illustrating an operation of the slave apparatus 300 according to the first embodiment.
Fig. 13 is a hardware configuration example of a master apparatus 100 according to a modification example of the first embodiment.
Fig. 14 is a flowchart illustrating an operation of a master apparatus 100 according to a second embodiment.
Fig. 15 is a flowchart illustrating an operation of a slave apparatus 300 according to the second embodiment.
Fig. 16 is a configuration example of a wired network of a master-slave system 90 according to a third embodiment.
Fig. 17 is a configuration example of a relay apparatus 500 according to the third embodiment.
Fig. 18 is a configuration example of the relay apparatus 500 according to the third embodiment.
Fig. 19 is a configuration example of a master apparatus 100 according to a fourth embodiment.
Fig. 20 is a configuration example of a slave apparatus 300 according to the fourth embodiment.
Fig. 21 is a configuration example of a relay apparatus 500 according to a fifth embodiment.
Fig. 22 is a configuration example of the relay apparatus 500 according to the

### fifth embodiment.

### Description of Embodiments

In descriptions of the embodiments and the drawings, the same reference numerals are assigned to the same elements or corresponding elements. Descriptions of elements assigned the same reference numerals will be omitted or simplified as appropriate. Arrows in the drawings mainly indicate flows of data or flows of processes.

### First Embodiment.

Below, details of the present embodiment will be described with reference to the drawings.

### ^{∗∗∗} Description of Configuration ^{∗∗∗}

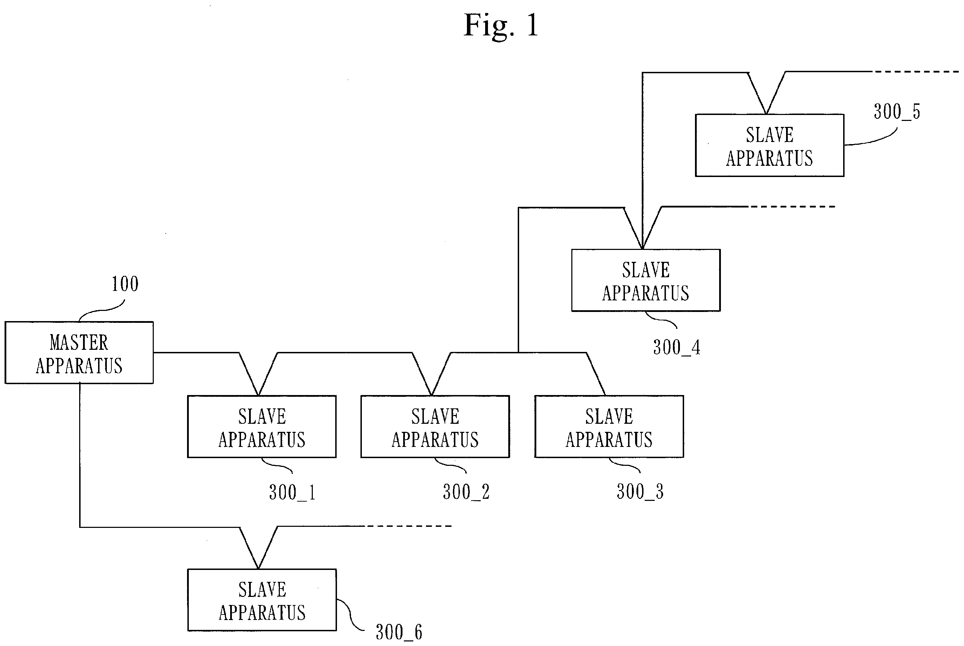

Fig. 1 illustrates a configuration example of a wired network of a master-slave system 90 assumed in the present embodiment. The master-slave system 90 includes one master apparatus 100 and at least one slave apparatus 300. The master apparatus 100 is equivalent to a parent apparatus. The slave apparatus 300 is equivalent to a child apparatus. Note that, descriptions such as 300_1 in the present diagram are for distinguishing a plurality of elements.

Each of a plurality of slave apparatuses 300 is, in a wired manner, connected to the one master apparatus 100 by T-shape branching, multidrop connection, or a combination of these. Note that, the master apparatus 100 and the plurality of slave apparatuses 300 are connected by a network cable in a wired manner so as not to form a closed loop. The master-slave system 90 may include a slave apparatus whose configuration is different from that of the slave apparatus 300.

Note that, each slave apparatus 300 is assumed to have a unique ID (Identification). That is, each slave apparatus 300 has an identifier for identifying each slave apparatus 300. The master apparatus 100 is assumed to know the ID of each slave apparatus 300.

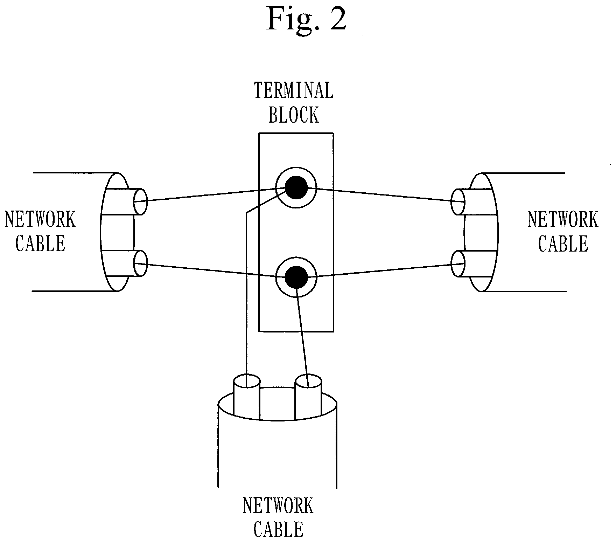

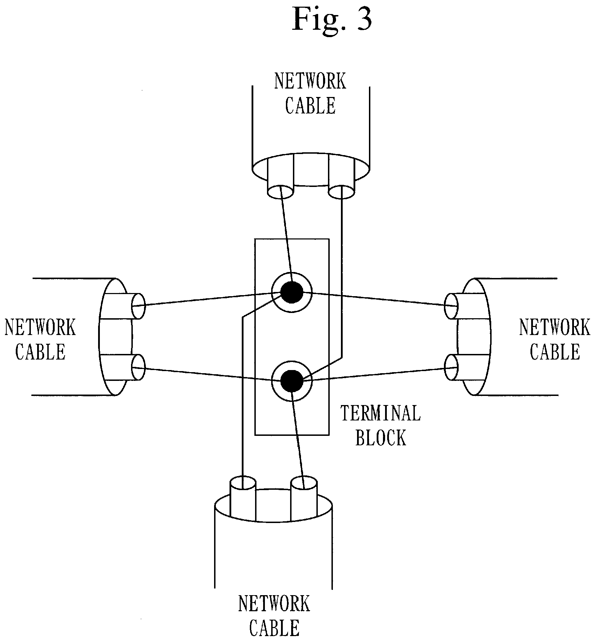

Figs. 2 and 3 illustrate specific examples of the T shape branching. The T-shape branching is to branch some point on the network cable, with use of a terminal block.

The T-shape branching is not limited to branching into three directions as illustrated in Fig. 2, and may be branching into four directions as illustrated in Fig. 3, or may be branching into five or more directions.

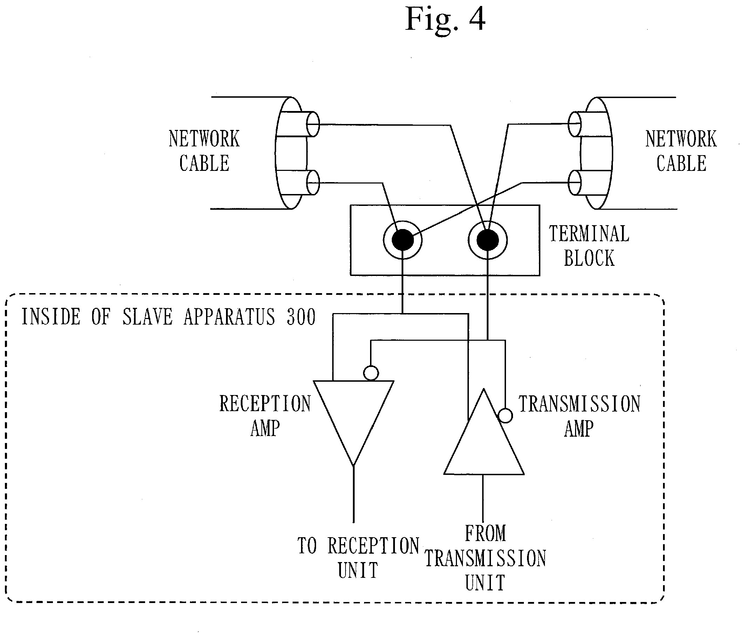

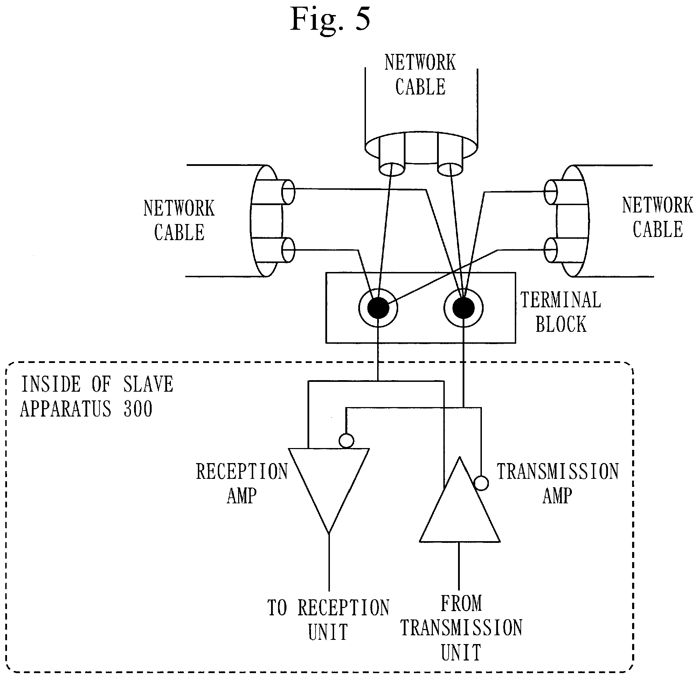

Figs. 4 and 5 illustrate specific examples of the multidrop connection. The multidrop connection is a connection where two or more network cables are connected on the terminal block of a device and further the terminal block also serves as a branching point. In these diagrams, a rectangular frame outlined by dotted lines and annotated with "INSIDE OF SLAVE DEVICE 300", indicates a part of the inside of the slave apparatus 300. Note that, a serial-signal transmission unit 400 is annotated with "TRANSMISSION UNIT", and a serial-signal reception unit 360 is annotated with "RECEPTION UNIT". "AMP" is an abbreviation for an amplifier.

The number of network cables is not limited to two as illustrated in Fig. 4, and may be three as illustrated in Fig. 5, or may be four or more.

The network cables are not limited to a pair of cables, and may be a set of three or more cables, as illustrated in Figs. 2 to 5.

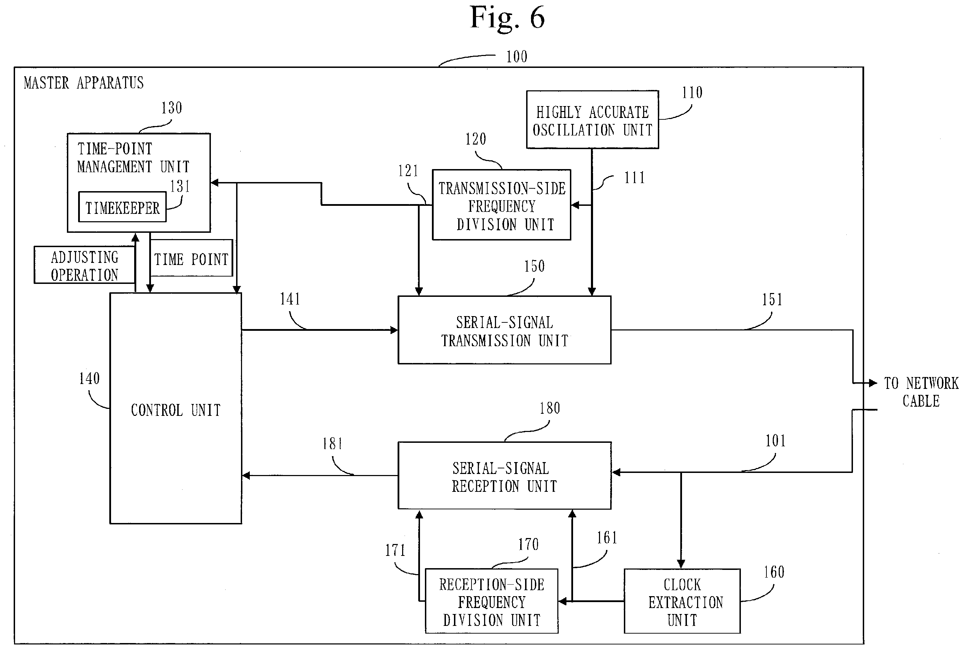

Fig. 6 illustrates a configuration example of the master apparatus 100 according to the present embodiment. As illustrated in the present diagram, the master apparatus 100 includes a highly accurate oscillation unit 110, a transmission-side frequency division unit 120, a time-point management unit 130, a control unit 140, a serial-signal transmission unit 150, a clock extraction unit 160, a reception-side frequency division unit 170, and a serial-signal reception unit 180. Note that, rectangles depicted at some points on arrows indicate pieces of data to be transferred or pieces of information on instructions.

The highly accurate oscillation unit 110 generates a transmission-side communication clock 111 and provides the generated transmission-side communication clock 111 for the serial-signal transmission unit 150 and the transmission-side frequency division unit 120. The highly accurate oscillation unit 110 is typically made up of a highly accurate oscillator. A specific example of the highly accurate oscillator is an oscillator which has a characteristic that a difference between a center frequency and a nominal value is small, a characteristic that drift is small, a characteristic that a jitter constituent is a little, and a characteristic of being insusceptible to outside-environment factors such as temperature and humidity. A specific example of the highly accurate oscillator is an oscillator conforming to IEEE (Institute of Electrical and Electronics Engineers) 802.1AS-2011 or IEEE1588-2008.

The highly accurate oscillator is also referred to as an oscillator. The oscillator produces a clock signal as a communication clock. The oscillator included in the master apparatus 100 is highly accurate compared with an oscillator included in the slave apparatus 300.

The transmission-side communication clock 111 is a clock signal used when data is serialized.

The transmission-side frequency division unit 120 receives the transmission-side communication clock 111, generates a transmission-side data clock 121 by dividing a frequency of the transmission-side communication clock 111, and provides the generated transmission-side data clock 121 for the serial-signal transmission unit 150, the time-point management unit 130, and the control unit 140. The transmission-side frequency division unit 120 is typically made up of a frequency divider.

The transmission-side data clock 121 is a clock signal used for generating a signal including a clock constituent. In some cases, the transmission-side data clock is also referred to as a transmission-side inside data clock.

The time-point management unit 130 receives the transmission-side data clock 121, and manages a time-point, using the received transmission-side data clock 121. The time-point management unit 130 includes a timekeeper 131.

The timekeeper 131 operates, using the transmission-side data clock 121 as a reference point, and delivers time-point information to the control unit 140. Further, the control unit 140 performs an operation of adjusting the time point of the timekeeper 131 as necessary. The timekeeper 131 is also referred to as a master timekeeper. The master timekeeper is driven based on the clock signal produced by the oscillator.

The control unit 140 generates transmission data 141, and delivers the generated transmission data 141 to the serial-signal transmission unit 150. The transmission data 141 is data including information to be transmitted to the slave apparatus 300.

Further, the control unit 140 receives reception data 181 and processes the received reception data 181 as appropriate. The reception data 181 is data including information received from the slave apparatus 300.

The control unit 140 may record each of a time point when reception serial data 101 is received, and a time point when transmission serial data 151 is transmitted.

The serial-signal transmission unit 150 generates the transmission serial data 151, using the transmission-side data clock 121, the transmission-side communication clock 111, and the transmission data 141, and sends out the generated transmission serial data 151 to the network cable.

The transmission serial data 151 is a serial signal including a clock constituent. A specific example of the serial signal including the clock constituent is a signal encoded according to an 8b/10b encoding method or a 128b/132b encoding method. The 8b/10b encoding method is one of methods of communicating the data and the clock signal through a pair of serial signal lines. The 8b/10b encoding method is to add a redundant bit to the data, to avoid a long consecutive sequence of bits having the same values, and then to perform serialization on the data. Performing serialization is the same meaning as serializing.

The clock extraction unit 160 receives the reception serial data 101, and extracts a reception-side communication clock 161 from the received reception serial data 101. The clock extraction unit 160 is typically made up of a PLL (a Phase-locked loop). The clock extraction unit 160 extracts the reception-side communication clock 161 from the reception serial data 101 transmitted from the slave apparatus 300 through the network cable. The reception serial data 101 includes a clock constituent. The reception-side communication clock 161 is a clock signal used when the serialized data is deserialized.

The reception-side frequency division unit 170 divides the frequency of the reception-side communication clock 161, generates a reception-side data clock 171, and provides the generated reception-side data clock 171 for the serial-signal reception unit 180. The reception-side frequency division unit 170 is typically made up of a frequency divider.

The reception-side data clock 171 is a clock signal used for decoding the signal including the clock constituent. In some cases, the reception-side data clock is also referred to as reception-side inside data clock.

The serial-signal reception unit 180 generates the reception data 181 by decoding reception serial data 182, and gives the generated reception data 181 to the control unit 140. The reception serial data 182 includes a clock constituent.

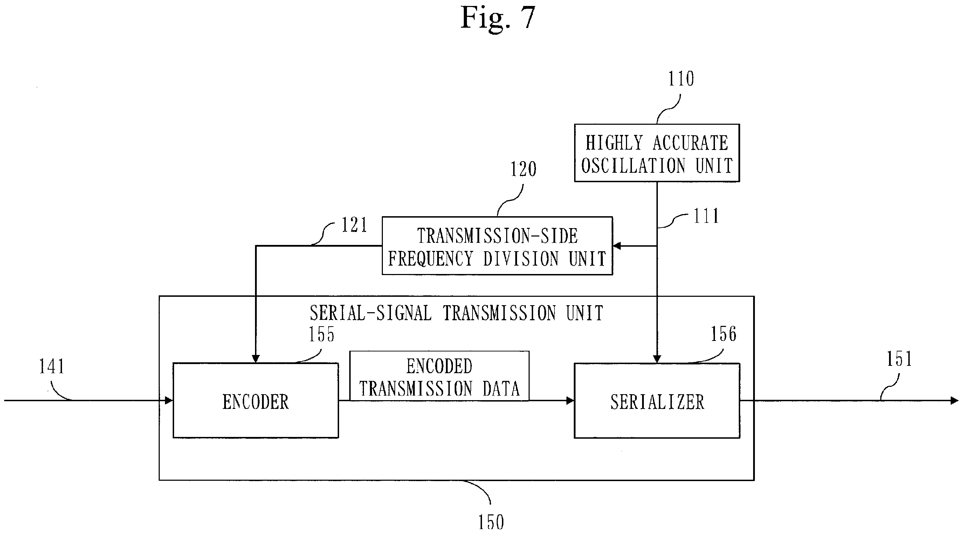

Fig. 7 illustrates a configuration example of the serial-signal transmission unit 150. The serial-signal transmission unit 150 includes an encoder 155 and a serializer 156. In the present example, the method of communicating the data and the clock signal through the pair of serial signal lines is adopted for the serial-signal transmission unit 150.

Below, as an example, a case where the 8b/10b encoding method is adopted for the serial-signal transmission unit 150 will be described.

The encoder 155 is compatible with the 8b/10b encoding method, operates by the transmission-side data clock 121, and generates the encoded transmission data of 10 bits by adding redundant data of 2 bits to the given transmission data 141 of 8 bits (1 byte).

The serializer 156 performs serialization on the encoded transmission data, using the transmission-side communication clock.

The serial data generated in such a way is the transmission serial data 151 including the clock constituent. Further, when there is no transmission data, the encoder 155 keeps outputting a code of 10 bits which means "no data". Consequently, the serial data including the clock constituent is constantly output from the serializer.

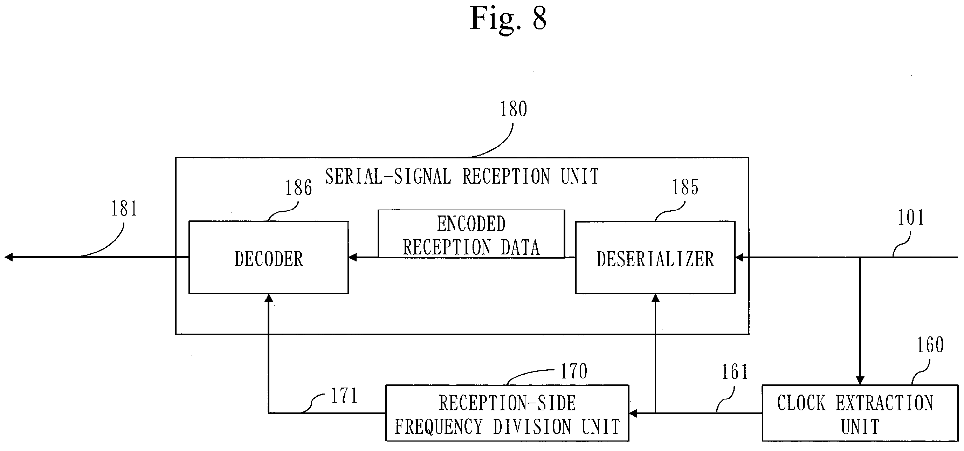

Fig. 8 illustrates a configuration example of the serial-signal reception unit 180. The serial-signal reception unit 180 includes a deserializer 185 and a decoder 186 as illustrated in the present diagram.

Below, as an example, the serial-signal reception unit 180 will be described based on an assumption that the serial-signal reception unit 180 receives the data encoded according to the 8b/10b encoding method.

One of methods of retrieving the original data and the communication clock from the serial data including the clock constituent is a method which uses the PLL. Fig. 8 illustrates an example in a case of adopting the present method. In the present method, when the serial data received including the clock constituent is input into the PLL, only a communication clock signal constituent is extracted from the serial data by a function of the PLL.

The deserializer 185 extracts the encoded reception data from the serial data including the clock constituent, using the reception-side communication clock 161 given from the clock extraction unit 160.

The decoder 186 operates by the reception-side data clock 171, and extracts the reception data of 8 bits which does not include the redundant data, from the encoded reception data, using the reception-side data clock 171. However, when the encoded reception data is a code of 10 bits which indicates "no data", the decoder 186 does not output the reception data.

The reception-side data clock 171 is generated from the communication clock by the reception-side frequency division unit 170 and given to the decoder 186. At this time, accuracy of the communication clock extracted by the clock extraction unit 160 depends on accuracy of the communication clock produced by the oscillator on the transmission-side. That is, a reception side can obtain a communication clock whose accuracy is the same as or equivalent to the accuracy of that on a transmission side. The accuracy of the communication clock is also referred to as frequency stability.

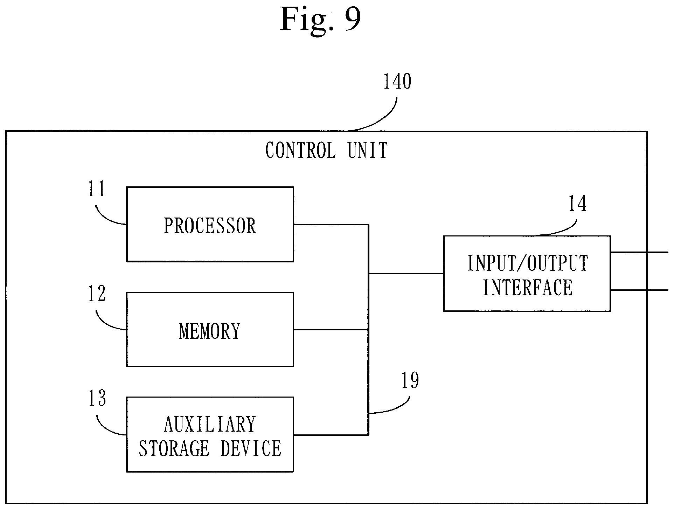

Fig. 9 illustrates a hardware configuration example of the control unit 140. As illustrated in the present diagram, the control unit 140 includes a processor 11, a memory 12, an auxiliary storage device 13, and an input/output interface 14. These pieces of hardware are connected to each other via a signal line 19. The control unit 140 is connected to the time-point management unit 130, the serial-signal transmission unit 150, and the serial-signal reception unit 180, which are outside the control unit 140, via the input/output interface 14. The input/output interface 14 is also referred to as an IO device interface.

Also, a data clock is utilized as an operation clock of a processor and the like.

The processor 11 is an IC (Integrated Circuit) which performs a computation process, and controls the pieces of hardware included in a computer. A specific example of the processor 11 is a CPU (Central Processing Unit), a DSP (Digital Signal Processor), or a GPU (Graphics Processing Unit).

The master apparatus 100 may include a plurality of processors which substitute the processor 11. The plurality of processors share a role of the processor 11.

The memory 12 is typically a volatile storage device. The memory 12 is also referred to as a main storage device or a main memory. A specific example of the memory 12 is a RAM (Random Access Memory). Data stored in the memory 12 is to be stored in the auxiliary storage device 13 as necessary.

The auxiliary storage device 13 is typically a non-volatile storage device. A specific example of the auxiliary storage device 13 is a ROM (Read Only Memory), an HDD (Hard Disk Drive), or a flash memory. Data stored in the auxiliary storage device 13 is loaded into the memory 12 as necessary.

The memory 12 and the auxiliary storage device 13 may be configured as a whole.

A master control process is a process executed by the control unit 140. As a specific example, the master control process is stored in the auxiliary storage device 13 as a program, and executed by the processor 11. The processor 11 accesses the memory 12 or the input/output interface 14 as necessary. The control unit 140 may include a different element.

The auxiliary storage device 13 stores a master control program. The master control program is a program which causes the computer to realize a function of at least the control unit 140 among the units included in the master apparatus 100. The master control program is loaded into the memory 12 and executed by the processor 11. A function of each of the units included in the slave apparatus 300 may be realized by software.

The control unit 140 utilizes a storage device as appropriate. As a specific example, the storage device is made up of at least one of the memory 12, the auxiliary storage device 13, a register in the processor 11, and a cash memory in the processor 11. Note that, data and information have the equivalent meanings in some cases. The storage device may be independent from the computer.

Each of a function of the memory 12 and a function of the auxiliary storage device 13 may be realized by a different storage device.

A hardware configuration of each of units other than the control unit 140 may be equivalent to the hardware configuration of the control unit 140.

The master apparatus 100 may be made up of a plurality of computers.

The master apparatus 100 may include a communication device 15. The communication device 15 is a receiver and a transmitter. A specific example of the communication device 15 is a communication chip or an NIC (Network Interface Card).

Any programs described in the present specification may be recorded in a non-volatile recording medium which is computer readable. A specific example of the non-volatile recording medium is an optical disc or a flash memory. Any programs described in the present specification may be provided as a program product.

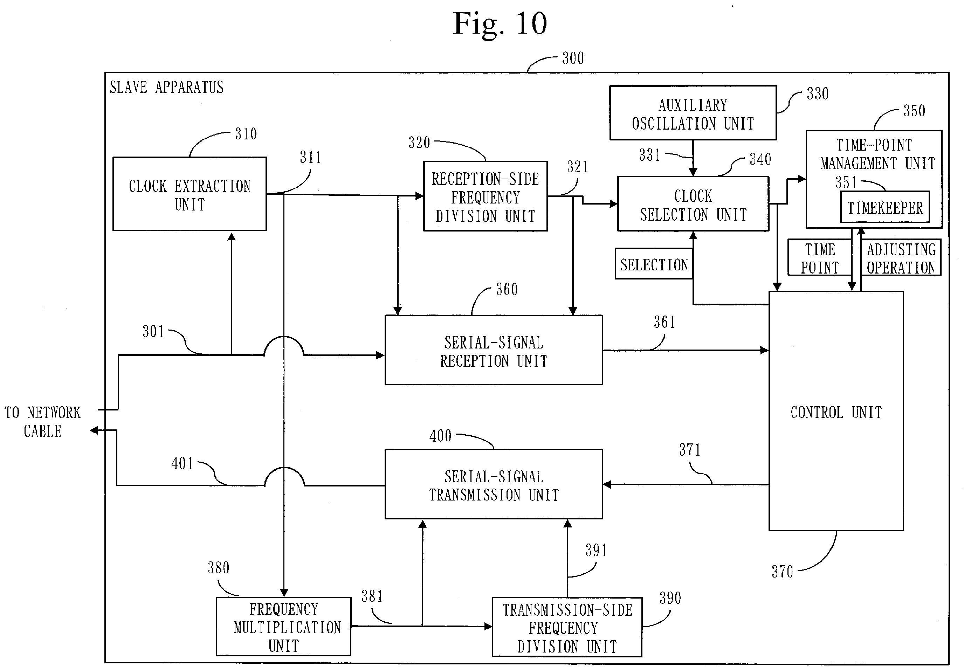

Fig. 10 illustrates a configuration example of the slave apparatus 300 according to the present embodiment. As illustrated in the present diagram, the slave apparatus 300 includes a clock extraction unit 310, a reception-side frequency division unit 320, an auxiliary oscillation unit 330, a clock selection unit 340, a time-point management unit 350, the serial-signal reception unit 360, a control unit 370, a frequency multiplication unit 380, a transmission-side frequency division unit 390, and the serial-signal transmission unit 400.

The clock extraction unit 310 receives reception serial data 301, extracts a reception-side communication clock 311 from the received reception serial data 301, and provides the extracted reception-side communication clock 311 for the serial-signal reception unit 360. As long as the slave apparatus 300 receives the reception serial data 301, the clock extraction unit 310 extracts the communication clock from the reception serial data 301, as the reception-side communication clock 311. The clock extraction unit 310 is typically made up of the PLL.

The reception serial data 301 is a signal transmitted from the master apparatus 100 through the network cable and includes a clock constituent. The reception serial data 301 is data generated by performing serialization on master transmission data, using the communication clock. The master transmission data includes information transmitted by the master apparatus. The master transmission data may be data encoded so that the data includes a constituent of a master data clock. The master data clock is a clock signal generated by dividing the frequency of the communication clock.

The reception-side communication clock 311 is equivalent to the reception-side communication clock 161. According to a principle described above, clock accuracy of the reception-side communication clock 311 is the same as or equivalent to clock accuracy of the transmission-side communication clock 111.

The reception-side frequency division unit 320 receives the reception-side communication clock 311, generates a reception-side data clock 321 by dividing the frequency of the reception-side communication clock 311, and provides the generated reception-side data clock 321 for the serial-signal reception unit 360, the time-point management unit 350, and the control unit 370. The reception-side frequency division unit 320 is typically made up of a frequency divider.

The reception-side data clock 321 is equivalent to the reception-side data clock 171.

The auxiliary oscillation unit 330 generates an auxiliary clock 331, and provides the generated auxiliary clock 331 for the time-point management unit 350, when the reception-side frequency division unit 320 cannot generate the reception-side data clock 321 due to absence of the reception serial data 301. The auxiliary oscillation unit 330 is typically made up of the oscillator.

The auxiliary clock 331 is a clock signal whose frequency is at the same level as that of the reception-side data clock 321. It is acceptable if clock accuracy of the auxiliary clock 331 is lower than the clock accuracy of the transmission-side communication clock 111.

The clock selection unit 340 selects one of the reception-side data clock 321 and the auxiliary clock 331 as the clock signal to be delivered to the time-point management unit 350, following an instruction from the control unit 370.

The time-point management unit 350 manages the time point, using the reception-side data clock 321. The time-point management unit 350 includes a timekeeper 351.

The timekeeper 351 operates, using the reception-side data clock 321 as a reference point, and delivers the time-point information to the control unit 370. Further, the control unit 370 performs an operation of adjusting the time point of the timekeeper 351 as necessary. The timekeeper 351 is also referred to as a slave timekeeper. The slave timekeeper is driven based on the reception-side communication clock 311. The slave timekeeper may be driven by the reception-side data clock 321.

The serial-signal reception unit 360 receives the reception serial data 301, generates reception data 361 by decoding the reception serial data 301, and gives the generated reception data 361 to the control unit 370.

The serial-signal reception unit 360 may receive search serial data as the reception serial data 301. The search serial data is data obtained by performing serialization on master transmission data including information which means a search.

The serial-signal reception unit 360 may receive the synchronization serial data as the reception serial data. The synchronization serial data is data obtained by performing serialization on the master transmission data including master time-point synchronization information. The master time-point synchronization information is used for synchronizing the slave timekeeper to the master timekeeper. The master time-point synchronization information may include pieces of information on a time point 1 and a time point 4. The time point 1 is a time point indicated by the master timekeeper at a time when the master apparatus 100 transmits the search serial data. The time point 4 is a time point indicated by the master timekeeper at a time when the master apparatus 100 receives response serial data.

The serial-signal reception unit 360 may generate deserialized reception data by performing deserialization on the reception serial data 301, using the reception-side communication clock 311, and may decode the deserialized reception data, using the reception-side data clock 321. Performing deserialization has the same meaning as deserializing.

The control unit 370 is equivalent to the control unit 140. The control unit 370 gives transmission data 371 to the serial-signal transmission unit 400.

The control unit 370 may generate response data and slave time-point synchronization information. The response data includes information which means a response to the search serial data. The slave time-point synchronization information is used for synchronizing the slave timekeeper to the master timekeeper. The slave time-point synchronization information may include a time point 2 and a time point 3. The time point 2 is a time point indicated by the slave timekeeper at a time when the slave apparatus 300 receives the search serial data. The time point 3 is a time point indicated by the slave timekeeper at a time when the slave apparatus 300 transmits the response serial data.

The control unit 370 may synchronize the slave timekeeper to the master timekeeper based on the slave time-point synchronization information and the master time-point synchronization information. The control unit 370 may synchronize the slave timekeeper to the master timekeeper, using the time point 1, the time point 2, the time point 3, and the time point 4. In some cases, the time point 1, the time point 2, the time point 3, and the time point 4 are referred to as T1, T2, T3, and T4 respectively.

The control unit 370 may generate the transmission data. The transmission data includes information to be transmitted to a network to which the master apparatus belongs. The control unit 370 may generate identification data as the transmission data. The identification data includes information on an identifier.

The frequency multiplication unit 380 generates a transmission-side communication clock 381, and gives the generated transmission-side communication clock 381 to the serial-signal transmission unit 400. The frequency multiplication unit 380 is typically made up of a frequency multiplier. The frequency multiplication unit 380 may generate the transmission-side communication clock 381 by multiplying the frequency of the reception-side communication clock 311 by an even number.

The transmission-side communication clock 381 is a clock signal whose frequency is obtained by multiplying the frequency of the reception-side communication clock 311 by the even number.

The transmission-side frequency division unit 390 receives the transmission-side communication clock 381, generates a transmission-side data clock 391 by dividing the frequency of the transmission-side communication clock 381, and gives the generated transmission-side data clock 391 to the serial-signal transmission unit 400. The transmission-side frequency division unit 390 is typically made up of a frequency divider.

The transmission-side data clock 391 is equivalent to the transmission-side data clock 121.

The serial-signal transmission unit 400 receives the transmission data 371, the transmission-side communication clock 381, and the transmission-side data clock 391, generates transmission serial data 401, using the received data, and sends out the generated transmission serial data 401 to the network cable.

The serial-signal transmission unit 400 may generate the response serial data, and transmit the response serial data to the master apparatus 100. The response serial data is data obtained by performing serialization on the response data based on the reception-side communication clock 311.

The serial-signal transmission unit 400 may generate encoded transmission data by encoding the transmission data, using the transmission-side data clock 391, may generate the transmission serial data 401 by performing serialization on the encoded transmission data, using the transmission-side communication clock 381, and may transmit the transmission serial data 401. The encoded transmission data includes a constituent of the transmission-side data clock 391.

The serial-signal transmission unit 400 may generate the identification serial data as the transmission serial data 401, using identification data.

The transmission serial data 401 is equivalent to the transmission serial data 151.

Configurations of the serial-signal reception unit 360, the control unit 370, and the serial-signal transmission unit 400 are equivalent to the configurations of the serial-signal reception unit 180, the control unit 140, and the serial-signal transmission unit 150 respectively.

A hardware configuration of the slave apparatus 300 is equivalent to a hardware configuration of the master apparatus 100.

When the 8b/10b encoding method is adopted for the master apparatus 100, each of the transmission data 141 and the reception data 181 is a signal in a unit of 8 bits.

When the 8b/10b encoding method is adopted for the slave apparatus 300, each of the transmission data 371 and the reception data 361 is a signal in a unit of 8 bits.

### ^{∗∗∗} Description of Operation ^{∗∗∗}

An operation procedure of the master apparatus 100 is equivalent to a master control method. Further, a program which realizes an operation of at least the control unit 140 in the master apparatus 100 is equivalent to the master control program.

An operation procedure of the slave apparatus 300 is equivalent to a slave control method. Further, a program which realizes an operation of at least the control unit 370 in the slave apparatus 300 is equivalent to a slave control program.

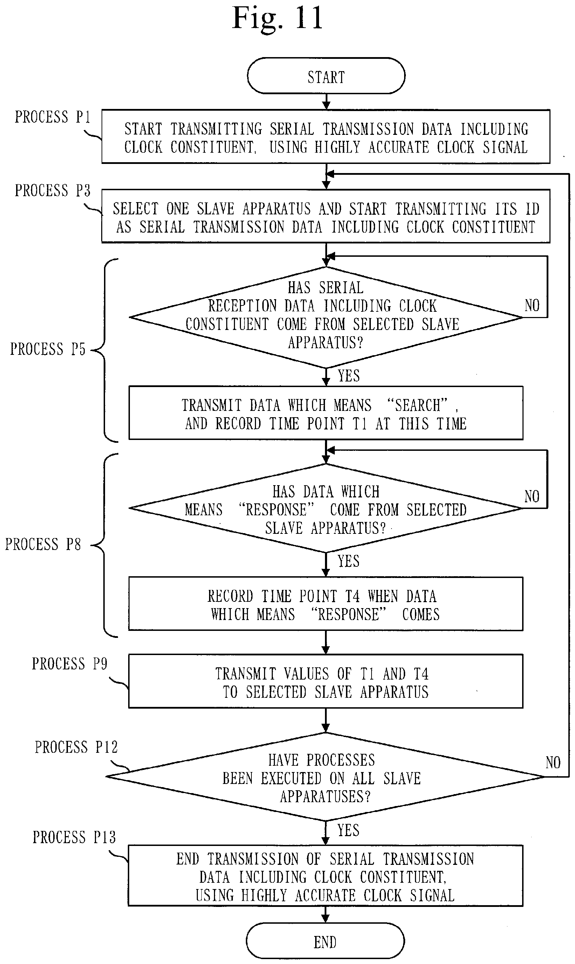

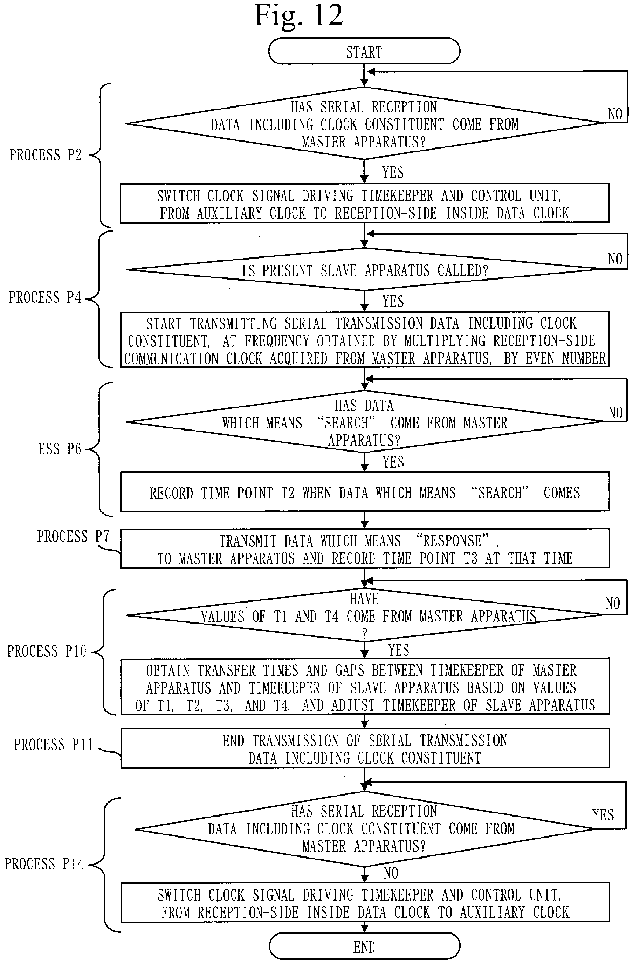

Fig. 11 is a flowchart illustrating an example of an operation of the master apparatus 100. Fig. 12 is a flowchart illustrating an example of an operation of the slave apparatus 300. Examples of the operations of the master-slave system 90 will be described with reference to Figs. 11 and 12. The master-slave system 90 executes processes in order of numbers following "Process P".

### (Process P1)

The master apparatus 100 starts transmitting the transmission serial data 151 to the slave apparatus 300. When there is no data to be transmitted to the slave apparatus 300, the master apparatus 100 keeps transmitting the code which means "no data".

### (Process P2)

Each slave apparatus 300 receives the transmission serial data 151 as the reception serial data 301. When each slave apparatus 300 receives the reception serial data 301, each slave apparatus 300 extracts the data and the reception-side communication clock 311 from the reception serial data 301, generates the reception-side data clock 321, and switches a clock driving the timekeeper 351 and the control unit 370, from the auxiliary clock 331 to the reception-side data clock 321.

### (Process P3)

The master apparatus 100 selects one slave apparatus 300 as a selected slave apparatus, and notifies the slave apparatus 300 of an ID of the selected slave apparatus, using the transmission serial data 151.

### (Process P4)

The selected slave apparatus generates the transmission-side communication clock 381, using the reception-side communication clock 311 extracted in Process P2, treats the generated transmission-side communication clock 381 as a communication clock of the selected slave apparatus, and starts transmitting the transmission serial data 401.

Note that, when there is no data to be transmitted, the selected slave apparatus keeps transmitting the code which means "no data".

### (Process P5)

When the master apparatus 100 receives the transmission serial data 401 as the reception serial data 101, the master apparatus 100 transmits the data which means "search", using the transmission serial data 151.

The master apparatus 100 records as T1, a time point when the data is transmitted.

### (Process P6)

When the selected slave apparatus detects the data which means "search", from the reception serial data 301, the selected slave apparatus records as T2, a time point when the data is received.

### (Process P7)

The selected slave apparatus transmits data which means "response", using the transmission serial data 401, and records as T3, a time point when the data is transmitted.

### (Process P8)

When the master apparatus 100 detects the data which means "response" from the reception serial data 101, the master apparatus 100 records as T4, a time point when the data is received.

### (Process P9)

The master apparatus 100 transmits pieces of information on T1 and T4, to the selected slave apparatus, using the transmission serial data 151.

### (Process P10)

When the selected slave apparatus receives the pieces of information on T1 and T4, from the master apparatus 100, the selected slave apparatus collates T2 and T3 recorded by the selected slave apparatus, with the received T1 and T4 respectively, calculates signal transfer times and a difference in a time point from the master apparatus 100, and adjusts the timekeeper 351 based on the calculated results. The signal transfer time is time required for transferring the signal between the selected slave apparatus and the master apparatus 100.

### (Process P11)

The selected slave apparatus stops transmitting the transmission serial data 401.

### (Process P12)

The master apparatus 100 executes Process P3 to Process P10 on each of all of the slave apparatuses 300 other than the selected slave apparatus.

When Process P3 to Process P10 are executed on all of the slave apparatuses 300, the master apparatus 100 proceeds to Process P13.

### (Process P13)

The master apparatus 100 ends the transmission of the transmission serial data 151.

### (Process P14)

When the slave apparatus 300 no longer receives the transmission serial data 151, the slave apparatus 300 switches the clock driving the timekeeper 351 and the control unit 370, from the reception-side data clock 321 to the auxiliary clock 331.

### ^{∗∗∗} Description of Effect of First Embodiment ^{∗∗∗}

As above, according to the present embodiment, the master apparatus 100 provides the highly accurate clock signal of the highly accurate oscillation unit 110 included in the master apparatus 100, for the slave apparatus 300, using the serial data including the clock constituent. The slave apparatus 300 extracts the clock from the serial data received from the master apparatus 100 and uses the extracted clock for the time-point synchronization.

Therefore, the slave apparatus 300 can perform the highly accurate time-point synchronization even without having the highly accurate oscillator.

Further, the signal constituent in the 8b/10b encoding method has a harmonic obtained by multiplying the communication clock frequency by an odd number. In the present embodiment, the slave apparatus 300 sets the communication clock frequency used by the slave apparatus 300, to the number obtained by multiplying the communication clock frequency used by the master apparatus 100, by an even number.

Therefore, according to the present embodiment, when the 8b/10b encoding method is adopted for the master apparatus 100 and the slave apparatus 300, it is possible to reduce interference between the signal transmitted by the master apparatus 100 and the signal transmitted by the slave apparatus 300.

### ^{∗∗∗} Other Configurations ^{∗∗∗}

### ^{∗∗∗} First Modification Example ^{∗∗∗}

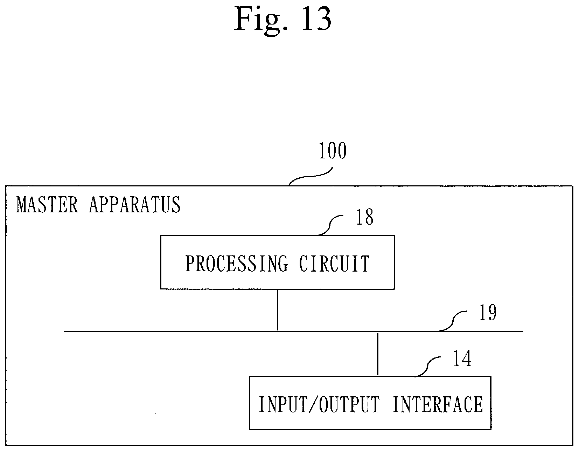

Fig. 13 illustrates a hardware configuration example of the master apparatus 100 according to the present modification example.

As illustrated in the present diagram, the master apparatus 100 includes a processing circuit 18 instead of at least one of the processor 11, the memory 12, and the auxiliary storage device 13.

The processing circuit 18 is hardware which realizes at least a part of each of the units included in the master apparatus 100.

The processing circuit 18 may be dedicated hardware or a processor which executes a program stored in the memory 12.

When the processing circuit 18 is the dedicated hardware, a specific example of the processing circuit 18 is a single circuit, a composite circuit, a programed processor, a parallel-programed processor, an ASIC (ASIC is an Application Specific Integrated Circuit), an FPGA (Field Programmable Gate Array), or a combination of these.

The master apparatus 100 may include a plurality of processing circuits which substitute the processing circuit 18. The plurality of processing circuits share a role of the processing circuit 18.

In the master apparatus 100, a part of functions may be realized by the dedicated hardware, and the rest of the functions may be realized by software or firmware.

As a specific example, the processing circuit 18 is realized by the hardware, the software, the firmware, or a combination of these.

The processor 11, the memory 12, the auxiliary storage device 13, and the processing circuit 18 are collectively referred to as "processing circuitry". That is, a function of each functional component in the master apparatus 100 is realized by the processing circuitry.

A function of each functional component in the slave apparatus 300 may be realized by the processing circuitry as with the function of each functional component in the master apparatus 100.

Further, the master apparatuses 100 and the slave apparatuses 300 according to the other embodiments may have configurations equivalent to that in the present modification example.

### Second Embodiment.

Below, mainly matters different from the above-described embodiment will be described with reference to the drawings.

The master-slave system 90 according to the present embodiment can infer network topology, by applying the first embodiment to the present embodiment. In some cases, the network topology is referred to as topology.

### ^{∗∗∗} Description of Configuration ^{∗∗∗}

The slave apparatus 300 is connected, in a wired manner, to another slave apparatus 300 which has the same function as that of the slave apparatus 300.

The control unit 140 according to the present embodiment infers the network topology. The control unit 140 may use any technique to infer the network topology.

When the slave apparatus 300 receives the identification serial data, the control unit 370 generates time-point data as the transmission data. The time-point data includes information on a time point indicated by the slave timekeeper at a time when the slave apparatus 300 receives the identification serial data.

The serial-signal transmission unit 400 generates the time-point serial data as the transmission serial data 401, using the time-point data.

### ^{∗∗∗} Description of Operation ^{∗∗∗}

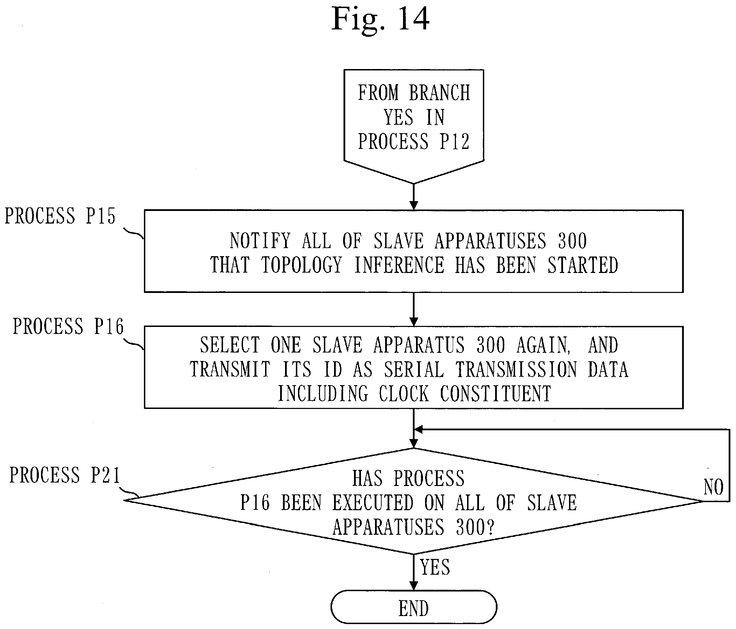

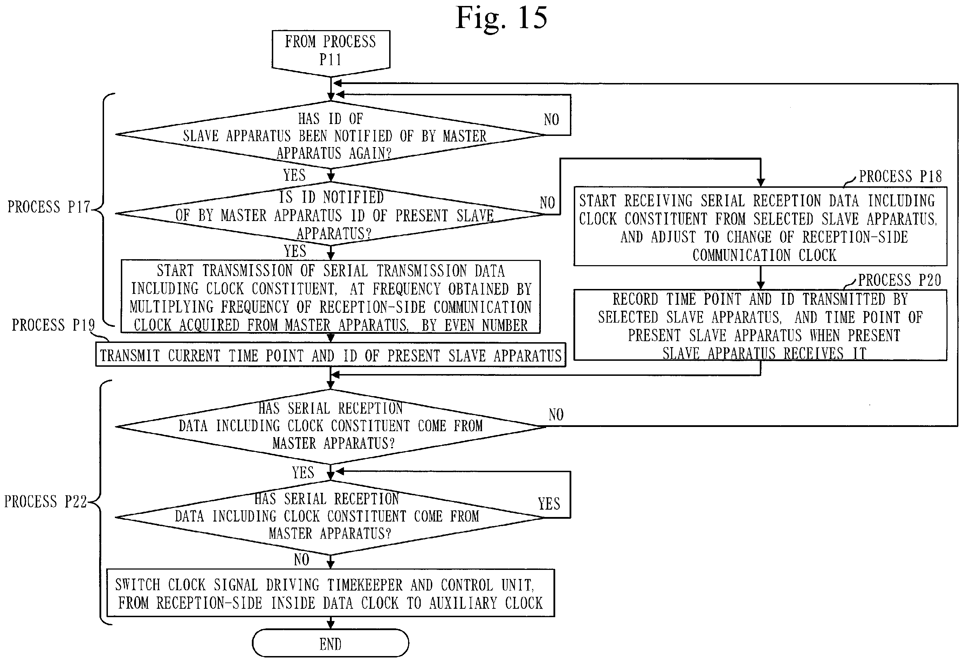

Fig. 14 is a flowchart illustrating an example of an operation of the master apparatus 100 according to the present embodiment. Fig. 15 is a flowchart illustrating an example of an operation of the slave apparatus 300 according to the present embodiment. Examples of the operations of the master-slave system 90 will be described with use of Figs. 14 and 15.

The master-slave system 90 performs Process P1 to Process P12.

### (Process P15)

The master apparatus 100 notifies the slave apparatus 300 that topology inference is started, using the transmission serial data 151.

### (Process P16)

The master apparatus 100 selects one slave apparatus 300 as a selected slave apparatus, and notifies the slave apparatus 300 of an ID of the selected slave apparatus, using the transmission serial data 151. Below, in descriptions according to the present embodiment, the selected slave apparatus means the slave apparatus 300 selected in the present process.

### (Process P17)

The selected slave apparatus executes a process equivalent to Process P4.

### (Process P18)

Each of slave apparatuses 300 other than the selected slave apparatus starts receiving as the reception serial data 301, the transmission serial data 401 transmitted by the selected slave apparatus.

At this time, the frequency of the reception-side communication clock 311 changes to a number obtained by multiplying the frequency before execution of the present process, by an even number. In each of the slave apparatuses 300 other than the selected slave apparatus, the reception-side frequency division unit 320 divides the frequency of the reception-side communication clock 311 or each of the timekeeper 351 and the control unit 370 divides the frequency of the reception-side data clock 321. Consequently, influence of the data received from the selected slave apparatus is cancelled out.

### (Process P19)

The selected slave apparatus transmits a current time point and the ID of the selected slave apparatus, using the transmission serial data 401.

### (Process P20)

Each of all of the slave apparatuses 300 other than the selected slave apparatus receives the transmission serial data 401 transmitted by the selected slave apparatus in Process P17, and records: the current time point and the ID of the selected slave apparatus; and a current time point of each of the slave apparatuses 300 other than the selected slave apparatus at a time when each of all of the slave apparatuses 300 other than the selected slave apparatus receives the transmission serial data 401.

The master apparatus 100 repeats Process P15 to Process P20 on each of all of the slave apparatuses 300 other than the selected slave apparatus.

### (Process P21)

The master apparatus 100 infers the topology, and after the topology inference is completed, issues a notification that the topology inference has been completed.

### (Process P22)

Each slave apparatus 300 aggregates in one place, information on the ID and the current time point acquired in Process P15 to Process P20 and transmitted by the slave apparatuses 300 other than each slave apparatus 300, and information on the current time point of each slave apparatus 300 at the time when each slave apparatus 300 receives the ID and the current time point.

Each slave apparatus 300 may execute the present process by transmitting the pieces of information subject to the aggregation, using the transmission serial data 401, or may execute the present process by using another means. Further, a place in which the pieces of information are aggregated does not need to be the master apparatus 100.

When each slave apparatus 300 is notified by the master apparatus 100 that the topology inference has been completed, and when each slave apparatus 300 ends receiving the transmission serial data 151 from the master apparatus 100, each slave apparatus 300 switches the clock driving the timekeeper 351 and the control unit 370, from the reception-side data clock 321 to the auxiliary clock 331.

### ^{∗∗∗} Description of Effect of Second Embodiment ^{∗∗∗}

The master-slave system 90 according to the present embodiment implements measurement of the signal transfer times between the master apparatus 100 and each slave apparatus 300, and the like, in addition to implementing the operations indicated in the first embodiment. Signal transfer times are aggregated in one place. Based on a premise that the network cable in the wired network is not supposed to form a closed loop, the master apparatus 100 and the slave apparatus 300 can infer the topology of the network, using the signal transfer times.

Therefore, in the master-slave system 90 according to the present embodiment, although the slave apparatus 300 is not equipped with the highly accurate oscillator, it is possible to infer the topology of the wired network in the master-slave system 90.

### Third Embodiment.

Below, mainly matters different from the above-described embodiments will be described with reference to the drawings.

### ^{∗∗∗} Description of Configuration ^{∗∗∗}

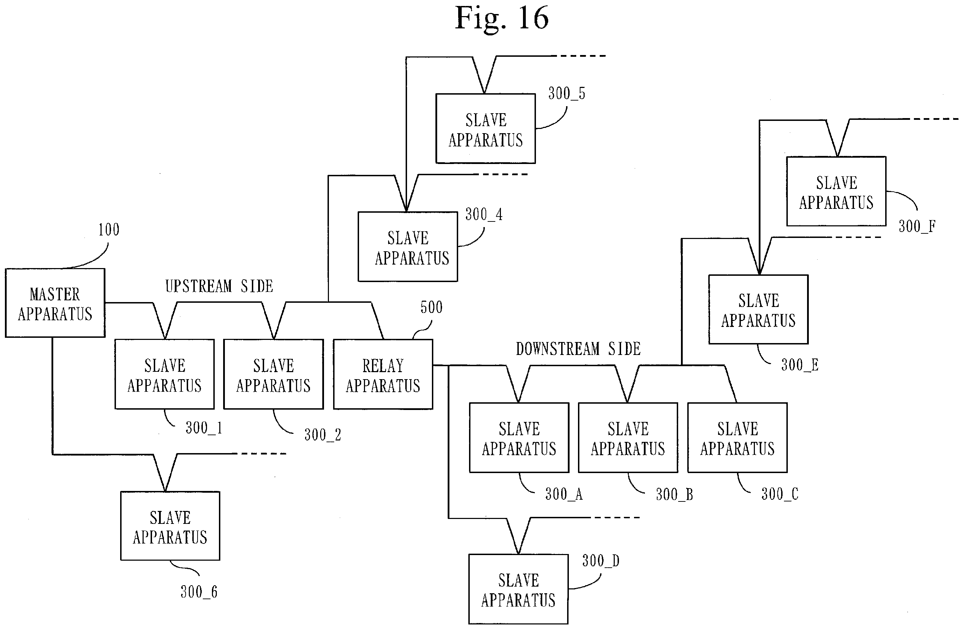

Fig. 16 illustrates a configuration example of the wired network in the master-slave system 90 according to the present embodiment. As illustrated in the present diagram, the master-slave system 90 includes at least one relay apparatus 500. The master apparatus 100, the plurality of slave apparatuses 300, and at least one relay apparatus 500 are connected in a wired manner so as not to form a closed loop. A slave apparatus 300 connected to the master apparatus 100 via one of at least one relay apparatus 500 treats the one of at least one relay apparatus 500 as the master apparatus 100, and is connected to the one of at least one relay apparatus 500. The slave apparatuses 300 which belong to a downstream side are connected to the relay apparatus 500 instead of the master apparatus 100.

An upstream side is made up of the master apparatus 100, and slave apparatuses 300 connected to the master apparatus 100. The downstream side is not connected to the master apparatus 100 and is made up of slave apparatuses 300 connected to the relay apparatus 500.

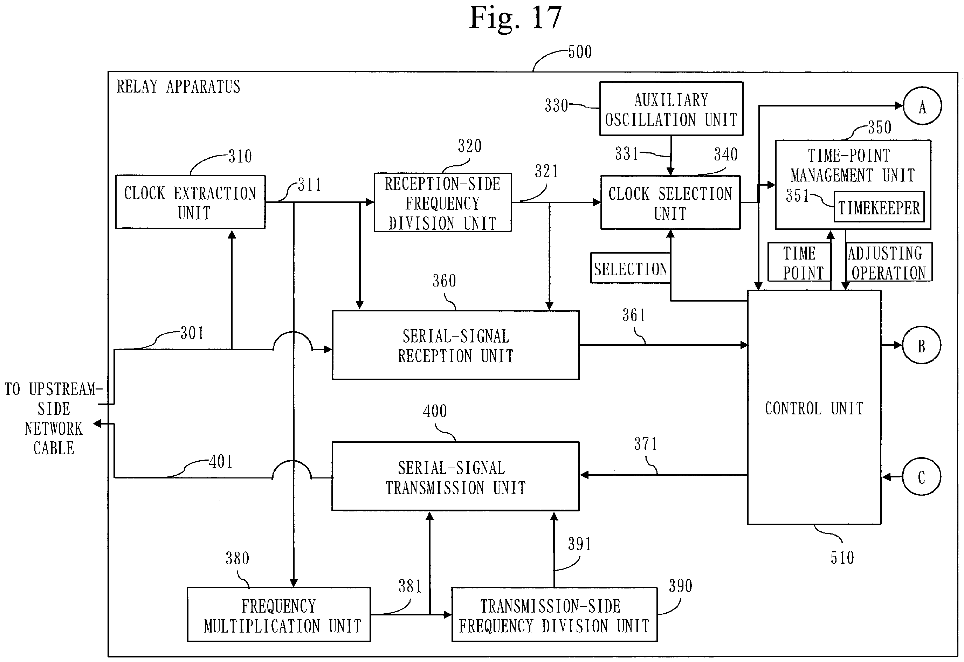

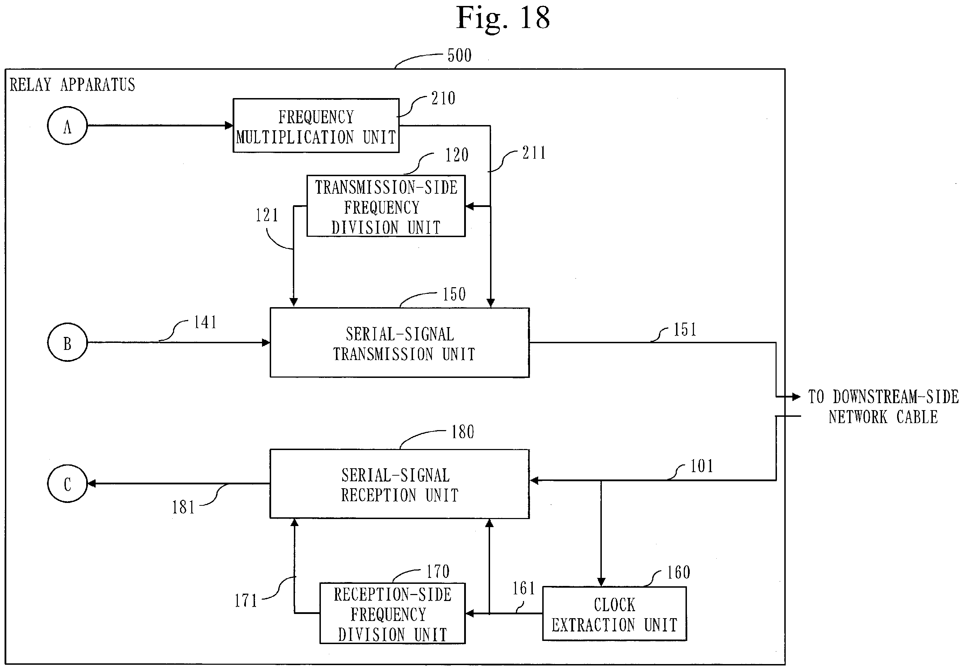

Figs. 17 and 18 illustrate a configuration example of the relay apparatus 500. The configuration example of the relay apparatus 500 is a combination of Fig. 17 and Fig. 18. Alphabets enclosed by circles in Fig. 17 and Fig. 18 indicate linkages. The configuration example of the relay apparatus 500 is fully depicted when the same alphabets in the Fig. 17 and Fig. 18 are linked to each other.

As illustrated in Figs. 17 and 18, the relay apparatus 500 has a configuration of a combination of the master apparatus 100 and the slave apparatus 300 according the first embodiment. A configuration in Fig. 17 is the upstream side and is equivalent to the slave apparatus 300. A configuration in Fig. 18 is the downstream side and is equivalent to the master apparatus 100. However, the relay apparatus 500 is not equipped with the highly accurate oscillation unit 110 unlike the master apparatus 100. The relay apparatus 500 utilizes the reception-side communication clock 311 on the upstream side as the transmission-side communication clock 111 on the downstream side, instead of including the highly accurate oscillation unit 110. The relay apparatus 500 includes a frequency multiplication unit 210. The frequency multiplication unit 210 generates a transmission-side communication clock 211, using the reception-side data clock 321. The transmission-side communication clock 211 is used instead of the transmission-side communication clock 111.

The timekeeper 351 included in the relay apparatus 500 is also referred to as a relay timekeeper.

A control unit 510 is an appropriate combination of the control unit 140 and the control unit 370.

A hardware configuration of the relay apparatus 500 is equivalent to the hardware configuration of the master apparatus 100.

### ^{∗∗∗} Description of Operation ^{∗∗∗}

An operation procedure of the relay apparatus 500 is equivalent to a relay method. Further, a program which realizes an operation of at least the control unit 510 in the relay apparatus 500 is equivalent to a relay program.

The relay apparatus 500 relays a signal from the upstream side to the downstream side and relays a signal from the downstream side to the upstream side.

Since operations of the relay apparatus 500 on the upstream side are equivalent to the operations of the slave apparatus 300 except for transmission/reception of the signal to/from the downstream side, descriptions will be omitted.

Since operations of the relay apparatus 500 on the downstream side are equivalent to the operations of the master apparatus 100 except for transmission/reception of the signal to/from the upstream side, and the use of the signal received from the upstream side as appropriate, descriptions will be omitted.

### ^{∗∗∗} Description of Effect of Third Embodiment ^{∗∗∗}

As above, the master-slave system 90 according to the present embodiment includes the relay apparatus 500. The relay apparatus 500 utilizes the reception-side communication clock 311 on the upstream side as the transmission-side communication clock 111 on the downstream side.

In some cases, the master-slave system 90 needs to relay the signal between the networks for some reason. In the present case, when at least only the master apparatus 100 includes the highly accurate oscillation unit 110, the master-slave system 90 can implement the highly accurate time-point synchronization as indicated in the first embodiment and infer the topology as indicated in the second embodiment, by using the relay apparatus 500 according to the present embodiment.

### ^{∗∗∗} Other Configurations ^{∗∗∗}

### < Second Modification Example >

A configuration of the relay apparatus 500 may be equivalent to the configuration indicated in the modification example in the first embodiment.

Further, also configurations of the relay apparatuses 500 according to the other embodiments may be equivalent to the configuration in the present modification example.

### Fourth Embodiment.

Below, mainly matters different from the above-described embodiments will be described with reference to the drawings.

### ^{∗∗∗} Description of Configuration ^{∗∗∗}

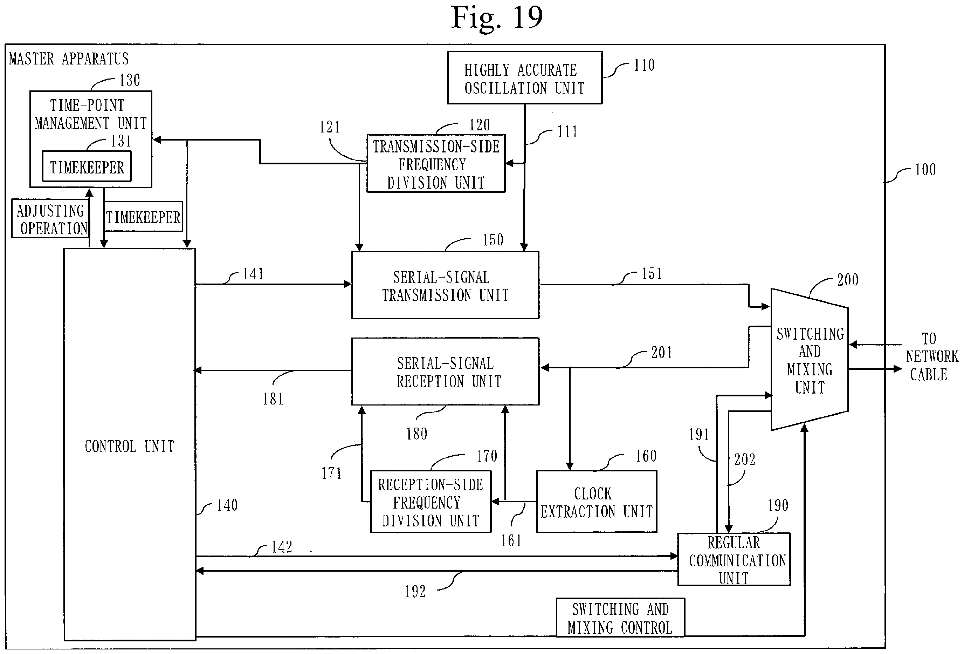

Fig. 19 illustrates a configuration example of the master apparatus 100 according to the present embodiment. The master apparatus 100 according to the present embodiment includes a regular communication unit 190 and a switching and mixing unit 200 in addition to a configuration of the master apparatus 100 according to the first embodiment.

The regular communication unit 190 performs communication according to a regular process. The regular process is a process other than a highly accurate process, which does not need to be based on the highly accurate time-point synchronization. Specific examples of the highly accurate process are a process of executing the highly accurate time-point synchronization, and a process of inferring the topology. A means which consumes less electricity than the serial-signal transmission unit 150 and the serial-signal reception unit 180 is adopted for the regular communication unit 190.

The regular communication unit 190 receives transmission data 142, generates transmission data 191, using the received transmission data 142, and transmits the generated transmission data 191.

Further, the regular communication unit 190 receives reception data 102, generates reception data 192, using the received reception data 102, and delivers the generated reception data 192 to the control unit 140. When the master apparatus 100 executes the regular process, the serial-signal reception unit 180 and the serial-signal transmission unit 150 do not have to operate.

The switching and mixing unit 200 follows an instruction from the control unit 140, and switches the signals or mixes a plurality of signals. As a specific example, the switching and mixing unit 200 mixes a signal according to the regular process and a signal according to the highly accurate process when the master apparatus 100 executes the regular process and the highly accurate process simultaneously. The switching and mixing unit 200 mixes a plurality of signals whose frequencies are different from each other. As a specific example, the switching and mixing unit 200 includes passive mixing equipment or a mixer. Note that, a frequency of the signal to be used in the regular process and a frequency of the signal to be used in the highly accurate process are largely different from each other.

When the switching and mixing unit 200 receives the data where a plurality of types of signals are mixed, the switching and mixing unit 200 may divide the received data into the signals included therein.

The control unit 140 generates the transmission data 142, and delivers the generated transmission data 142 to the regular communication unit 190. The transmission data 142 includes information related to the regular process.

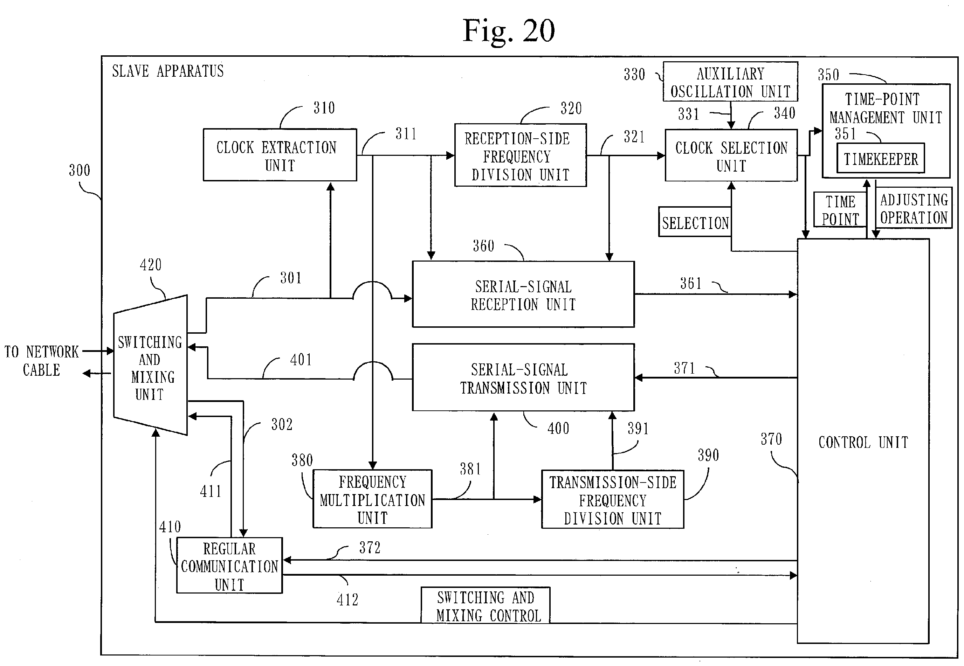

Fig. 20 illustrates a configuration of the slave apparatus 300 in a fourth embodiment. The slave apparatus 300 includes a regular communication unit 410 and a switching and mixing unit 420 as with the master apparatus 100.

The regular communication unit 410 is equivalent to the regular communication unit 190.

The switching and mixing unit 420 is equivalent to the switching and mixing unit 200.

### ^{∗∗∗} Description of Operation ^{∗∗∗}

Since an operation according to the master apparatus 100 is equivalent to the operations in the previous embodiments except that the switching and mixing unit 200 switches the signals as appropriate and mixes the signals as appropriate, descriptions will be omitted.

Since an operation according to the slave apparatus 300 is equivalent to the operations in the previous embodiments as with the operation according to the master apparatus 100, descriptions will be omitted.

### ^{∗∗∗} Description of Effect of Fourth Embodiment ^{∗∗∗}

When the 8b/10b encoding method as a specific example is adopted for the master apparatus 100 and the slave apparatus 300 in the first to third embodiments, transmission of the code meaning "no data" continues as long as absence of data to be transmitted continues. In the present case, the master apparatus 100 and the slave apparatus 300 may occasionally consume too much electricity.

According to the present embodiment, in this case, it is possible to perform communication in another method, using the regular communication unit 190 and the regular communication unit 410, except when the highly accurate process is performed. Further, since the switching and mixing unit 200 and the switching and mixing unit 420 are included, the 8b/10b signal can be used as necessary. Therefore, according to the present embodiment, it is possible to reduce the electricity consumption required for the communication.

### Fifth Embodiment.

Below, mainly matters different from the above-described embodiments will be described with reference to the drawings.

### ^{∗∗∗} Description of Configuration ^{∗∗∗}

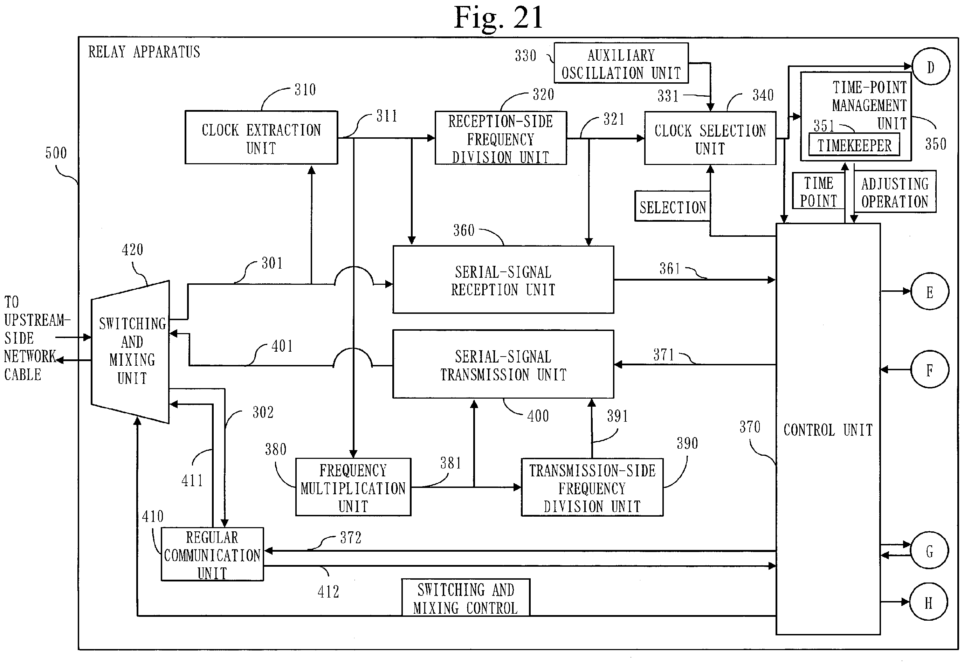

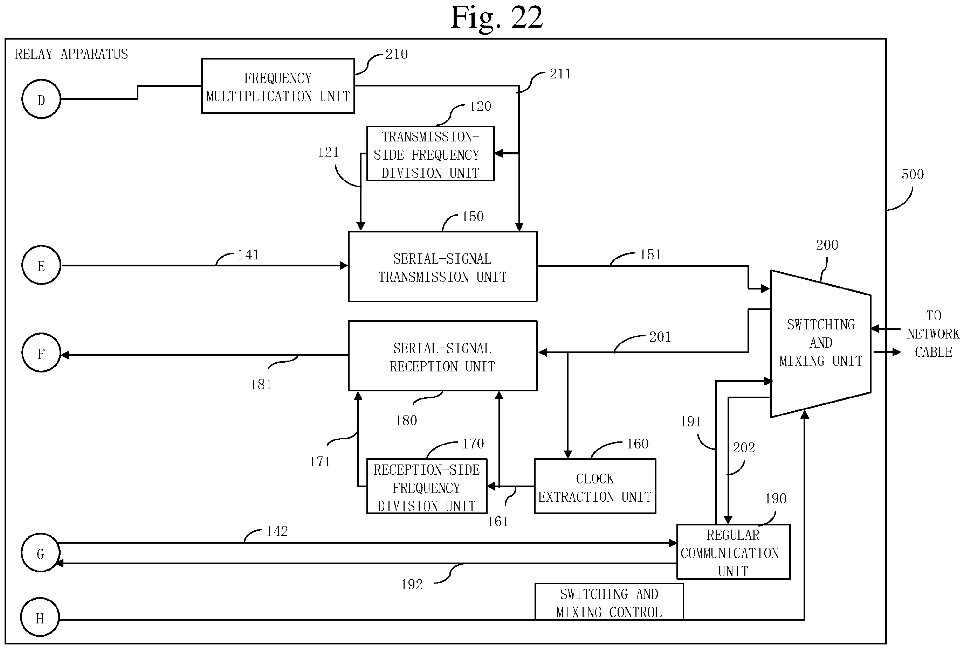

Figs. 21 and 22 illustrate a configuration of the relay apparatus 500 according to the present embodiment. Figs. 21 and 22 are interpreted in the same as Figs. 17 and 18. The relay apparatus 500 is like a combination of the relay apparatus 500 according to the third embodiment, and the master apparatus 100 and the slave apparatus 300 according to the fourth embodiment.

As illustrated in Fig. 21, the relay apparatus 500 includes the regular communication unit 410 and the switching and mixing unit 420 on the upstream side. As illustrated in Fig. 22, the relay apparatus 500 includes the regular communication unit 190 and the switching and mixing unit 200 on the downstream side.

### ^{∗∗∗} Description of Operation ^{∗∗∗}

Since the operation according to the present embodiment is a combination of the operation according to the third embodiment and the operation according to the fourth embodiment as appropriate, descriptions will be omitted.

### ^{∗∗∗} Description of Effect of Fifth Embodiment ^{∗∗∗}

As above, the relay apparatus 500 according to the present embodiment is like the combination of the relay apparatus 500 according to the third embodiment, and the master apparatus 100 and the slave apparatus 300 according to the fourth embodiment.

Therefore, the master-slave system 90 according to the present embodiment has both a characteristic indicated in the third embodiment and a characteristic indicated in the fourth embodiment.

### ^{∗∗∗} Other Embodiments ^{∗∗∗}

Any combination of the above-described embodiments, modification to an arbitrary component in each embodiment, or omission of an arbitrary component in each embodiment is possible.

Further, the embodiments are not limited to the ones indicated in the first to fifth embodiments, and various types of modification can be made as necessary. Procedures described using flowcharts and the like may be modified as appropriate.

### Reference Signs List

11: processor, 12: memory, 13: auxiliary storage device, 14: input/output interface, 15: communication device, 18: processing circuit, 19: signal line, 90: master-slave system, 100: master apparatus, 101: reception serial data, 102: reception data, 110: highly accurate oscillation unit, 111: transmission-side communication clock, 120: transmission-side frequency division unit, 121: transmission-side data clock, 130: time-point management unit, 131: timekeeper, 140: control unit, 141, 142: transmission data, 150: serial-signal transmission unit, 151: transmission serial data, 155: encoder, 156: serializer, 160: clock extraction unit, 161: reception-side communication clock, 170: reception-side frequency division unit, 171: reception-side data clock, 180: serial-signal reception unit, 181: reception data, 182: reception serial data, 185: deserializer, 186: decoder, 190: regular communication unit, 191: transmission data, 192: reception data, 200: switching and mixing unit, 210: frequency multiplication unit, 211: transmission-side communication clock, 300: slave apparatus, 301: reception serial data, 302: reception data, 310: clock extraction unit, 311: reception-side communication clock, 320: reception-side frequency division unit, 321: reception-side data clock, 330: auxiliary oscillation unit, 331: auxiliary clock, 340: clock selection unit, 350: time-point management unit, 351: timekeeper, 360: serial-signal reception unit, 361: reception data, 370: control unit, 371, 372: transmission data, 380: frequency multiplication unit, 381: transmission-side communication clock, 390: transmission-side frequency division unit, 391: transmission-side data clock, 400: serial-signal transmission unit, 401: transmission serial data, 410: regular communication unit, 411: transmission data, 412: reception data, 420: switching and mixing unit, 500: relay apparatus, 510: control unit.

## Claims

1. A slave apparatus which is, in a wired manner, connected to a master apparatus and which receives from the master apparatus, using a communication clock, as reception serial data, data generated by performing serialization on master transmission data transmitted by the master apparatus, the master apparatus being equipped with an oscillator producing a clock signal as the communication clock, the slave apparatus comprising:
a clock extraction unit to extract the communication clock as a reception-side communication clock, from the reception serial data, as long as the slave apparatus receives the reception serial data; and
a time-point management unit to include a slave timekeeper driven based on the reception-side communication clock.

2. The slave apparatus according to claim 1,
wherein the master apparatus is equipped with a master timekeeper driven based on the clock signal produced by the oscillator, and
wherein the slave apparatus receives as the reception serial data, search serial data obtained by performing serialization on master transmission data including information which means a search, and
the slave apparatus comprising:
a control unit to generate response data including information which means a response to the search serial data, and generate slave time-point synchronization information to be used for synchronizing the slave timekeeper to the master timekeeper; and
a serial-signal transmission unit to generate response serial data by performing serialization on the response data based on the reception-side communication clock, and transmit the response serial data to the master apparatus, and
wherein the slave apparatus receives as the reception serial data, synchronization serial data obtained by performing serialization on master transmission data including master time-point synchronization information to be used for synchronizing the slave timekeeper to the master timekeeper, and
wherein the control unit synchronizes the slave timekeeper to the master timekeeper based on the slave time-point synchronization information and the master time-point synchronization information.

3. The slave apparatus according to claim 2,
wherein the master time-point synchronization information includes a time point 1 indicated by the master timekeeper at a time when the master apparatus transmits the search serial data, and a time point 4 indicated by the master timekeeper at a time when the master apparatus receives the response serial data,
wherein the slave time-point synchronization information includes a time point 2 indicated by the slave timekeeper at a time when the slave apparatus receives the search serial data, and a time point 3 indicated by the slave timekeeper at a time when the slave apparatus transmits the response serial data, and
wherein the control unit synchronizes the slave timekeeper to the master timekeeper, using the time point 1, the time point 2, the time point 3, and the time point 4.

4. The slave apparatus according to claim 2 or 3, comprising
a reception-side frequency division unit to generate reception-side data clock by dividing a frequency of the reception-side communication clock, and
wherein the slave timekeeper is driven by the reception-side data clock.

5. The slave apparatus according to claim 4,
wherein the master transmission data has been encoded so as to include a constituent of a master data clock generated by dividing a frequency of the communication clock, and
wherein the control unit generates transmission data to be transmitted to a network to which the master apparatus belongs, and
the slave apparatus comprising:
a serial-signal reception unit to generate deserialized reception data by performing deserialization on the reception serial data, using the reception-side communication clock, and decode the deserialized reception data, using the reception-side data clock;
a frequency multiplication unit to generate a transmission-side communication clock by multiplying the frequency of the reception-side communication clock by an even number; and
a transmission-side frequency division unit to generate a transmission-side data clock by dividing a frequency of the transmission-side communication clock, and
wherein the serial-signal transmission unit generates encoded transmission data including a constituent of the transmission-side data clock by encoding the transmission data, using the transmission-side data clock, generates transmission serial data by performing serialization on the encoded transmission data, using the transmission-side communication clock, and transmits the transmission serial data.

6. The slave apparatus according to claim 5, which has an identifier for identifying the slave apparatus,
wherein the control unit generates as the transmission data, identification data including information on the identifier, and
wherein the serial-signal transmission unit generates identification serial data as the transmission serial data, using the identification data.

7. The slave apparatus according to claim 6, which is connected, in a wired manner, to another slave apparatus having the same function as that of the slave apparatus,
wherein when the slave apparatus receives the identification serial data, the control unit generates as the transmission data, time-point data including information on a time point indicated by the slave timekeeper at a time when the slave apparatus receives the identification serial data, and
wherein the serial-signal transmission unit generates as the transmission serial data, time-point serial data, using the time-point data.

8. The slave apparatus according to claim 6 or 7, comprising
a regular communication unit to execute communication according to a regular process which does not need to be based on highly accurate time-point synchronization, and
wherein when the regular process is executed, the serial-signal reception unit and the serial-signal transmission unit do not operate.

9. A relay apparatus which is, in a wired manner, connected to a master apparatus and which receives from the master apparatus, using a communication clock, as reception serial data, data generated by performing serialization on master transmission data transmitted by the master apparatus, the master apparatus being equipped with an oscillator producing a clock signal as the communication clock, the relay apparatus comprising:
a clock extraction unit to extract the communication clock as a reception-side communication clock, from the reception serial data, as long as the relay apparatus receives the reception serial data; and
a time-point management unit to include a relay timekeeper driven based on the reception-side communication clock.

10. A master-slave system comprising: a master apparatus equipped with an oscillator producing a clock signal as a communication clock; and a plurality of slave apparatuses according to any one of claims 1 to 8,
wherein the master apparatus and the plurality of slave apparatuses are connected in a wired manner so as not to form a closed loop.

11. The master-slave system according to claim 10, comprising: at least one relay apparatus according to claim 9; and the plurality of slave apparatuses according to any one of claims 1 to 8,
wherein the master apparatus, the plurality of slave apparatuses, and at least one relay apparatus are connected in a wired manner so as not to form a closed loop, and
wherein a slave apparatus connected to the master apparatus via one of at least one relay apparatus treats the one of at least one relay apparatus as the master apparatus and is connected to the one of at least one relay apparatus.

12. A slave control method by a slave apparatus which is, in a wired manner, connected to a master apparatus and which receives from the master apparatus, using a communication clock, as reception serial data, data generated by performing serialization on master transmission data transmitted by the master apparatus, the master apparatus being equipped with an oscillator producing a clock signal as the communication clock, the slave control method comprising:
extracting, by a clock extraction unit, the communication clock as a reception-side communication clock, from the reception serial data, as long as the slave apparatus receives the reception serial data; and
including, by a time-point management unit, a slave timekeeper driven based on the reception-side communication clock.

13. A slave control program which causes a computer which is, in a wired manner, connected to a master apparatus and which receives from the master apparatus, using a communication clock, as reception serial data, data generated by performing serialization on master transmission data transmitted by the master apparatus, the master apparatus being equipped with an oscillator producing a clock signal as the communication clock:
to extract the communication clock as a reception-side communication clock, from the reception serial data, as long as the computer receives the reception serial data; and
to drive a slave timekeeper based on the reception-side communication clock.

14. A relay method by a relay apparatus which is, in a wired manner, connected to a master apparatus and which receives from the master apparatus, using a communication clock, as reception serial data, data generated by performing serialization on master transmission data transmitted by the master apparatus, the master apparatus being equipped with an oscillator producing a clock signal as the communication clock, the relay method comprising:
extracting, by a clock extraction unit, the communication clock as a reception-side communication clock, from the reception serial data, as long as the relay apparatus receives the reception serial data; and
including, by a time-point management unit, a relay timekeeper driven based on the reception-side communication clock.

15. A relay program which causes a computer which is, in a wired manner, connected to a master apparatus and which receives from the master apparatus, using a communication clock, as reception serial data, data generated by performing serialization on master transmission data transmitted by the master apparatus, the master apparatus being equipped with an oscillator producing a clock signal as the communication clock:
to extract the communication clock as a reception-side communication clock, from the reception serial data, as long as the computer receives the reception serial data; and
to drive a relay timekeeper based on the reception-side communication clock.
